Europäisches Patentamt

European Patent Office

Office européen des brevets

(19)

(11) EP 1 551 169 A2

(12) EUROPEAN PATENT APPLICATION

(43) Date of publication:
06.07.2005 Bulletin 2005/27

(51) Int Cl.$^7$: H04N 5/208

(21) Application number: 04078563.6

(22) Date of filing: 30.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 02.01.2004 KR 2004000010

(71) Applicant: LG Electronics Inc.
Seoul 150-875 (KR)

(72) Inventors:
• Byun, Seong Chan
Mapo-gu Seoul (KR)
• Park, Sang Wook
Kimpo-si Kuynggi-do (KR)

(74) Representative: Bergquist, Kjell Gunnar
Albihns Göteborg AB,
Box 142
401 22 Göteborg (SE)

(54) Image processing apparatus and method

(57) An image processing apparatus and method is provided. The image processing apparatus discriminatively processes pixels located in a contour of an captured image according to the image's size and/or brightness information, thereby making it possible to remove a nose of the image and to sharpen the contour of the image.

FIG.1

EP 1 551 169 A2

Description

## BACKGROUND OF THE INVENTION

### Field of the Invention

The present invention relates to an image processing device, and more particularly, to an image processing apparatus and method capable of decreasing a noise effect and simultaneously sharpening an image contour according to characteristics of an image.

### Description of the Related Art

Recently, with an increase in demand for a digital image processing device such as a digital camcorder and a camera phone, its functions become more and more diversified and intellectualized. Such an image processing device captures an image, and enlarges or reduces the image according to zoom scale factors, or displays or stores the image.

In the meantime, when the prior art image processing device performs a digital zoom function and a lens of its image capturing unit is not accurately focused, its taken image becomes unclear. In order to view the unclear image clearly, its contour should be sharpened.

However, as a contour of the unclear image is sharpened, a noise contained therein becomes increased. Such a noise occurs more greatly when the image's illuminance is low and the image's pixel number is small. That is, as the contour is sharpened, the noise is increased and the increased noise may incur an adverse effect.

As stated above, a noise effect according to various image conditions is not considered in the prior art image processing device. Accordingly, the prior art image processing device has a drawback in that when an image contour is sharpened, a noise is also clearly emphasized according to a change in image conditions and thereby its image quality is also deteriorated.

## SUMMARY OF THE INVENTION

Accordingly, the present invention is directed to an image processing apparatus and method that substantially obviates one or more problems due to limitations and disadvantages of the related art.

An object of the present invention is to provide an image processing apparatus and method capable of sharpening a contour of an image while minimizing a noise of the image.

Another object of the present invention is to provide an image processing apparatus and method capable of improving an image quality by adaptively sharpening a contour of an image according to various conditions of the image.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an image processing apparatus includes: an image capturing unit for capturing an image; a contour processing unit for sharpening a contour of the image considering the image's size and brightness information obtained from the image; and an image display unit for displaying the contour-sharpened image.

In another aspect of the present invention, an image processing method includes the steps of: capturing an image; sharpening a contour of the image considering the image's size and/or brightness information obtained from the captured image; and displaying the contour-sharpened image.

In further another aspect of the present invention, an image processing method includes the steps of: capturing an image; calculating the image's size and/or brightness parameters; calculating a high pass filtering parameter by using a function of the image size and/or brightness parameters and a high frequency component of a local image containing a contour; sharpening a contour of the image by using the high pas filtering parameter and the high frequency component; and displaying the contour-sharpened image.

Accordingly, the present invention sharpens a contour of an image and simultaneously reduces a noise effect, thereby making it possible to improve an image quality.

It is to be understood that both the foregoing general description and the following detailed description of the present invention are exemplary and explanatory and are intended to provide further explanation of the invention as claimed.

**BRIEF DESCRIPTION OF THE DRAWINGS**

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of an image processing apparatus according to an embodiment of the present invention;

Fig. 2 is a flow diagram illustrating a method for processing a contour of an image considering a noise in an image processing apparatus according to an embodiment of the present invention;

Fig. 3 is a flow diagram illustrating in detail a method for sharpening a contour of an image shown in Fig. 2;

Fig. 4 is a diagram illustrating an example of a 3x3 matrix mask; and

Fig. 5 is a diagram illustrating an example of a matrix for a brightness value of a local image.

**DETAILED DESCRIPTION OF THE INVENTION**

Reference will now be made in detail to the preferred embodiments of the present invention, examples of which are illustrated in the accompanying drawings. Wherever possible, the same reference numbers will be used throughout the drawings to refer to the same or like parts.

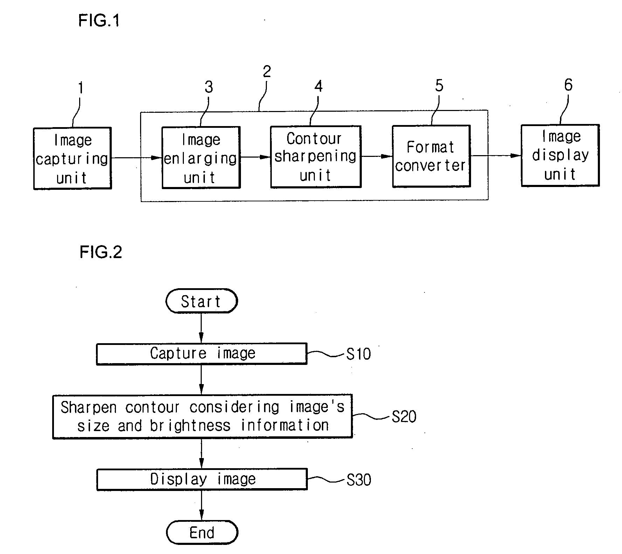

Fig. 1 is a block diagram of an image processing apparatus according to an embodiment of the present invention.

Referring to Fig. 1, the image processing apparatus is constructed to include an image capturing unit 1 for capturing an image, a contour processing unit 2 for sharpening a contour of an image considering an image's size and brightness information obtained from the captured image, and an image display unit 6 for displaying an image whose contour is processed by the contour processing unit 2.

The image capturing unit 1 may be embodied by a charge coupled device (CCD) or a complementary metal oxide semiconductor (CMOS) for capturing an image.

The contour processing unit 2 is constructed to include an image enlarging unit 3 for enlarging an image, a contour sharpening unit 4 for sharpening a contour of an image, and a format converter 5 for converting a format of an image into a format required for display.

The image enlarging unit 3 enlarges the captured image into an image of a given size according to a zoom-in factor requested by a user. At this time, it is preferable that the maximum enlargement size of the captured image is a screen size of the image display unit 6. If the user requests the captured image to be enlarged over the image display unit 6's screen size by a high zoom-in factor, such a request is not accepted.

The contour sharpening unit 4 is a core part of the present invention, and an operation thereof will now be described in detail.

First, the contour sharpening unit 4 obtains an image's size and brightness information from the enlarged image.

The image size information is the total pixel number (for example, 320×240) of a frame contained in the enlarged image. The image brightness information is a value obtained by dividing the total sum of luminance components of respective pixels contained in a one-frame image by the total pixel number, which is also called an energy value.

The image size information and the image brightness information affects a contour sharpening operation, and a degree of the affection can be divided by a given threshold value.

For example, by setting 320×240 to a first threshold value, the image size information can be divided into a case of above 320×240 and a case of below 320×240. Also, by setting 110 to a second threshold value, the image brightness information can be divided into a case of above 110 and a case of below 110. The division of the image size and brightness information by the first and second threshold values enables the obtainment of different-sized images' size and brightness parameters according to whether the image size and brightness information is above or below the first and second threshold values. The size and brightness parameters are a core factor affecting an operation of the contour sharpening unit 4.

Functions for obtaining the size and brightness parameters can be respectively expressed by Equation (1) and Equation (2) below.

$$a = f1 \text{ (image size information)} \tag{1}$$

$$b = f2\text{(image brightness information)} \tag{2}$$

where "a" and "b" are respectively image size and brightness parameters,

"f1" is a function for obtaining an image size parameter from image size information, and

"f2" is a function for obtaining an image brightness parameter from image brightness information.

Referring to Equations (1) and (2), after image size and brightness information is obtained, the obtained size information and the obtained brightness information are respectively compared with the predetermined first and second threshold values whereby proper image size and brightness parameters "a" and "b" are calculated.

For example, if the image size information is above the first threshold value, the image size parameter is calculated as "1", and if the image size information is below the first threshold value, the image size parameter is calculated as "0.5". Also, if the image brightness information is above the second threshold value, the image brightness parameter is calculated as "1", and if the image brightness information is below the second threshold value, the image brightness parameter is calculated as "0.5".

Here, the calculated image size and brightness values may be set to values other than "1" or "0.5". An operation of the image size and brightness parameters will be described later.

In the meantime, the contour sharpening unit 4 selects a local image containing a contour therein from the enlarged image. Thereafter, the contour sharpening unit 4 calculates a high frequency component of the local image by using a mask and luminance values of respective pixels contained in the selected local image. The high frequency component tends to occur greatly at an image portion containing a lot of contours, such as a man's hair and a landscape. Accordingly, the present invention uses the high frequency component as a core factor for adjusting a pixel value.

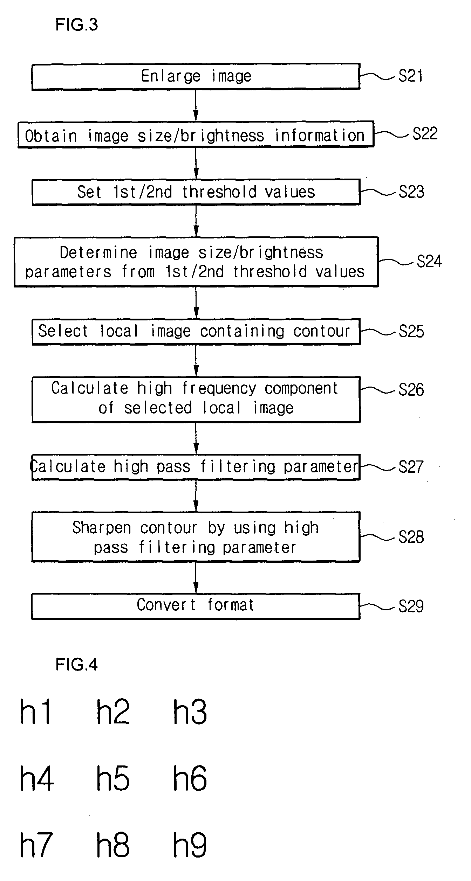

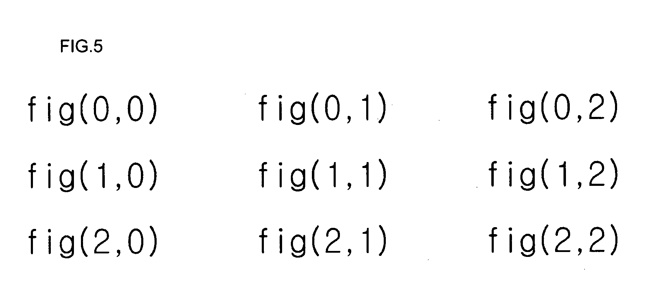

In detail, if a $3\times3$ mask is given as shown in Fig. 4 and luminance values of a local image are given as shown in Fig. 5, a high frequency component can be expressed by Equation (3) below.

$$\text{high} = h1\times\text{fig}(0,0) + h2\times\text{fig}(0,1) + h3\times\text{fig}(0,2) + h4\times\text{fig}(1,0) + h$$

$$5\times\text{fig}(1,1) + h6\times\text{fig}(1,2) + h7\times\text{fig}(2,0) + h8\times\text{fig}(2,1) + h9\times\text{fig}(2,2) \tag{3}$$

where "high" is a high frequency component,

"h1" through "h9" are sub-values of a mask, and

"fig(?,?)" are luminance values of respective pixels contained in a local image.

A high frequency component having an absolute value can be obtained by taking an absolute value of "high" obtained by Equation (3). The high frequency component having an absolute value can be expressed by Equation (4) below.

$$h = |\text{high}| \tag{4}$$

where "h" is a high frequency component having an absolute value.

A high pass filtering parameter "t" can be obtained from the high frequency component "h" and the image size and brightness parameters "a" and "b". The high pass filtering parameter "t" can be expressed by Equation (5) below.

$$t = f3(a,b) = a\times (h+b) \tag{5}$$

where "t" is a high pass filtering parameter, "f3" is a function for obtaining the high pass filtering parameter, "h" is a high frequency component of a local image, "a" is an image size parameter and "b" is an image brightness parameter.

Referring to Equation (5), the high pass filtering parameter "t" is obtained by adding the high frequency component "h" and the image brightness parameter "b" and then multiplying the resulting addition value by the image size parameter "a". That is, the high pass filtering parameter "t" is a linear function of the high frequency component "h", wherein the image brightness parameter "b" is a parallel displacement value of the linear function and the image size parameter "a" is a slope value of the linear function.

In this manner, the high pass filtering parameter "t" is changed according to the image size and brightness parameters "a" and "b" whereby a contour of an image is sharpened in accordance with a noise characteristic of an image. For example, when the image is bright and has a small noise, the image brightness parameter "b" is calculated as "1". Then, the high pass filtering parameter "t" becomes great whereby a contour of an image becomes brighter by the high frequency component "h" and the image brightness parameter "b". When the image is dark and has a large noise, the image brightness parameter "b" is calculated as "0,5". Then, the high pass filtering parameter "t" becomes small when compared with a case where an image is bright.

As described above, since the high pass filtering parameter "t" is changed according to a noise effect, a noise can be suppressed during the contour sharpening process. This principle can also be identically applied to the image size parameter "a".

In the meantime, according to circumstances, a noise can be somewhat suppressed during the contour sharpening process by applying only one of the image size and brightness parameters "a" and "b".

A process of sharpening a contour of an image according to the high pass filtering parameter "t" will now be described in detail.

A pixel value "fig_h(x,y)" after completion of the contour sharpening process can be expressed by Equation (6) below.

$$\text{fig\_h}(x,y) = \text{fig }(x,\ y) + t \times \text{high} \tag{6}$$

where "t" is a high pass filtering parameter,
"fig(x,y)" is an original pixel value corresponding to coordinates (x,y), and
"high" is a high frequency component of a local image.

Referring to Equation (6), the high pass filtering parameter "t" is multiplied by the high frequency component "high", and the resulting multiplication value is added to the original pixel value "fig(x,y)" whereby the contour sharpening process can be performed. Such a contour sharpening process is performed with respect to all the pixels contained the local image. In this manner, respective pixel values are newly designated according to the high frequency component of the local image whereby a contour of the image can be further sharpened. In particular, since the high frequency component is multiplied by the high pass filtering parameter "t" and the "t" is adaptively changed according to the image size and brightness information determining a noise characteristic of an image, a noise can be suppressed during the contour sharpening process.

After the contour sharpening unit 4 sharpens a contour of an image as describe above, the format converter 5 converts the contour-sharpened image into an image of a format used in the image display unit 6.

In the meantime, the above-constructed image processing apparatus can be applied to a camera phone, a digital camera, a digital camcorder, a personal portable terminal and a smart phone.

A method for processing a contour of an image considering a noise in the image processing apparatus according to the present invention will now be described in detail with reference to Figs. 2 and 3.

Fig. 2 is a flow diagram illustrating a method for processing a contour of an image considering a noise in an image processing apparatus according to an embodiment of the present invention, and Fig. 3 is a flow diagram illustrating in detail a method for sharpening a contour of an image shown in Fig. 2.

Referring to Figs. 2, an image of an object is captured (S10). At this time, the image can be captured by an image sensor such as a CCD or a CMOS. A contour of the image is sharpened considering the image's size and brightness information obtained from the captured image (S20). Thereafter, the contour-sharpened image is displayed on a screen (S30).

The contour sharpening process (S20) according to the image's size and brightness information will now be described in detail with reference to Fig. 3.

Referring to Fig. 3, the captured image captured in the image capturing process (S10) is enlarged according to a zoom-in factor requested by a user(S21). This enlargement process can be automatically performed, or is not performed if there is no request by the user.

Thereafter, the image's size and brightness information is obtained from the enlarged image (S22). Here, the image size information is the total number of pixels contained in a one-frame image, that is, the total pixel number. This image size information can be determined by an image sensor during the capture of a one-frame image. Also, the image brightness information is a value obtained by dividing the total sum of luminance components of respective pixels contained in a one-frame image by the total pixel number.

At this time, a first and second threshold values are set for discriminating the image's size and brightness information (S23). Here, the first threshold value is a value for discriminating the image's size, and can be set to 320x240. Also, the second threshold value is a value for discriminating the image's brightness, and can be set to 110. Of course, these threshold values may be varied in various ways.

An image size parameter "a" and an image brightness parameter "b" are determined considering the first and second threshold values (S24). For example, the image size parameter is determined by Equation (1). That is, if the obtained image size information is below the first threshold value, the image size parameter is determined as "0.5". Otherwise, if the obtained image size information is above the first threshold value, the image size parameter is determined as "1". Also, the image brightness parameter is determined by Equation (2). That is, if the obtained image brightness information is below the second threshold value, the image brightness parameter is determined as "0.5".

Otherwise, if the obtained image brightness information is above the second threshold value, the image brightness parameter is determined as "1".

Thereafter, a region image containing a contour is selected from the enlarged image (S25). At this time, the local image may include pixels corresponding to the contour and pixels neighboring the above pixels.

Then, a high frequency component "high" and an absolute value "h" of the high frequency component are calculated from the selected local image and a mask (S26).

Thereafter, a high pass filtering parameter "t" is calculated from the high frequency component "h", the image size parameter "a" and the image brightness parameter "b" (S27). In detail, the high pass filtering parameter "t" can be calculated by adding the high frequency component "h" and the image brightness parameter "b" and then multiplying the resulting addition value by the image size parameter "a".

Then, a contour is sharpened by using the calculated high pass filtering parameter (S28). This contour sharpening process is performed by using Equation (6). That is, the high pass filtering parameter "t" is multiplied by the high frequency component "high", and the resulting multiplication value is added to an original pixel value whereby the contour is sharpened. Such a contour sharpening process can be performed with respect to all the pixels contained the selected local image.

If a plurality of local images exist in the one-frame image, the steps S25 through S28 are repeated for all the existing local images.

Upon completion of the contour sharpening process for the one-frame image, a format of the contour-sharpened image is converted into a format of a screen (S29).

Thereafter, the format-converted image is displayed on the screen (S29 of Fig. 2).

As described previously, the present invention firstly reflects the image's size and brightness information and then multiplies the high frequency component of the local image by the high pass filtering parameter, thereby making it possible to very effectively suppress a noise during the contour sharpening process.

In detail, in case where the brightness of an image is above 110 whereby a noise little affects the image, the image brightness parameter "b" is determined as "1". On the contrary, in case where the brightness of an image is below 110 whereby a noise greatly affects the image, the image brightness parameter "b" is determined as "0.5". In this manner, the image brightness parameter is determined differently according to the brightness of the image, and the contour sharpening process is performed by using the differently-determined image brightness parameters whereby a noise can be effectively suppressed.

Similarly, in case where a pixel size of an image is below 320×240 whereby a noise greatly affects the image, the image size parameter "a" is determined as "1". On the contrary, in case where a pixel size of an image is above 320×240 whereby a noise little affects the image, the image size parameter "a" is determined as "0.5". Accordingly, a noise can be effectively suppressed.

As stated above, the present invention calculates different high pass filtering parameters according to an image's size and brightness information, and sharpens a contour of the image by using the different high pass filtering parameters, thereby making it possible to efficiently suppress a noise and sharpen the contour of the image.

Also, the present invention differently sharpens a contour of an image according to the brightness and size of the image, thereby making it possible to obtain a clearer image.

It will be apparent to those skilled in the art that various modifications and variations can be made in the present invention. Thus, it is intended that the present invention covers the modifications and variations of this invention provided they come within the scope of the appended claims and their equivalents.

**Claims**

1. An image processing method comprising the steps of:

    capturing an image;
    sharpening a contour of the image considering the image's size and/or brightness information obtained from the captured image; and
    displaying the contour-sharpened image.

2. The method according to claim 1, wherein the contour sharpening step comprises the steps of:

    calculating a high pass filtering parameter by using the image's size and brightness information; and
    sharpening a contour of a local image by using the calculated high pass filtering parameter.

3. The method according to claim 2, wherein the high pass filtering parameter is calculated after the image is enlarged.

4. The method according to claim 2 or 3, wherein the step of calculating the high pass filtering parameter comprises the steps of:

   calculating different image size and/or brightness parameters by comparing the image's size and/or brightness information with first and/or second threshold values;
   selecting from a local image containing a contour from the image;
   calculating a high frequency component of the selected local image by using a given mask; and
   calculating a high pass filtering parameter by using a function of the high frequency component and the image size and brightness parameters.

5. The method according to claim 4, wherein the high pass filtering parameter is calculated by adding an absolute vale of the high frequency component and the image brightness parameter and then multiplying the resulting addition value by the image size parameter.

6. The method according to one of claims 1 through 5, further comprising the step of converting a format of the contour-sharpened image into a format of a screen.

7. The method according to one of claims 1 through 6, wherein the image's size information is the total number of pixels contained in a one-frame image.

8. The method according to one of claims 1 through 6, wherein the image's brightness information is a value obtained by dividing the total sum of luminance components of respective pixels contained in a one-frame image by the total pixel number of the image.

9. The method according to claim 2, wherein the contour sharpening step is performed in such a way that a new pixel value is obtained by multiplying the high pass filtering parameter by a high frequency component of a local image containing a contour and then adding the resulting multiplication value to an original pixel value.

10. The method according to claim 4, wherein the image brightness parameter is a parallel displacement value of the function.

11. The method according to claim 4, wherein the image size parameter is a slope value of the function.

12. An image processing apparatus comprising:

    an image capturing unit for capturing an image;
    a contour processing unit for sharpening a contour of the image considering the image's size and brightness information obtained from the image; and
    an image display unit for displaying the contour-sharpened image.

13. The apparatus according to claim 12, wherein the contour processing unit comprises:

    an image enlarging unit for enlarging the captured image according to a zoom-in factor requested by a user; and
    a contour sharpening unit for calculating a high pass filtering parameter by using the image's size and brightness information and then sharpening a contour of the image by using the calculated high pass filtering parameter and a high frequency component of a local image.

14. The apparatus according to claim 13, further comprising a format converter for converting a format of the contour-sharpened image into a format of a screen.

15. The apparatus according to claim 13 or 14, wherein the counter sharpening unit calculates different image size and/or brightness parameters by comparing the image's size and/or brightness information with first and/or second threshold values, calculates a high frequency component of the local image, and calculates a high pass filtering parameter by using the high frequency component and the image size and brightness parameters.

16. The apparatus according to one of claims 12 through 15, which is applied to a camera phone, a digital camera, a digital camcorder, a personal portable terminal or a smart phone.

17. The apparatus according to one of claims 12 through 16, wherein the image capturing unit is an image sensor made of one of a CCD (charge coupled device) and a CMOS (complementary metal oxide semiconductor).

FIG.1

```
        1              3        2    4                 5                    6
  ┌──────────┐   ┌──────────┐  ┌──────────┐   ┌──────────┐      ┌──────────┐
  │  Image   │   │  Image   │  │ Contour  │   │          │      │  Image   │
  │capturing │──▶│enlarging │─▶│sharpening│──▶│  Format  │─────▶│ display  │
  │   unit   │   │   unit   │  │   unit   │   │converter │      │   unit   │
  └──────────┘   └──────────┘  └──────────┘   └──────────┘      └──────────┘
```

FIG.2

```
                    ┌──────────────┐
                    │    Start     │
                    └──────────────┘
                           │
                           ▼
          ┌──────────────────────────────┐
          │        Capture image         │────S10
          └──────────────────────────────┘
                           │
                           ▼
     ┌────────────────────────────────────────┐
     │ Sharpen contour considering image's     │────S20
     │   size and brightness information       │
     └────────────────────────────────────────┘
                           │
                           ▼
          ┌──────────────────────────────┐
          │        Display image         │────S30
          └──────────────────────────────┘
                           │
                           ▼
                    ┌──────────────┐
                    │     End      │
                    └──────────────┘
```

FIG.3

```
            ┌──────────────────────────────────┐
            │          Enlarge image           │───S21
            └──────────────────────────────────┘
                            │
                            ▼
          ┌──────────────────────────────────────┐
          │ Obtain image size/brightness information │───S22
          └──────────────────────────────────────┘
                            │
                            ▼
            ┌──────────────────────────────────┐
            │     Set 1st/2nd threshold values     │───S23
            └──────────────────────────────────┘
                            │
                            ▼
          ┌──────────────────────────────────────┐
          │     Determine image size/brightness     │
          │  parameters from 1st/2nd threshold values  │───S24
          └──────────────────────────────────────┘
                            │
                            ▼
            ┌──────────────────────────────────┐
            │  Select local image containing contour  │───S25
            └──────────────────────────────────┘
                            │
                            ▼
            ┌──────────────────────────────────┐
            │   Calculate high frequency component   │
            │        of selected local image        │───S26
            └──────────────────────────────────┘
                            │
                            ▼
            ┌──────────────────────────────────┐
            │  Calculate high pass filtering parameter  │───S27
            └──────────────────────────────────┘
                            │
                            ▼
            ┌──────────────────────────────────┐
            │      Sharpen contour by using high      │
            │        pass filtering parameter        │───S28
            └──────────────────────────────────┘
                            │
                            ▼
            ┌──────────────────────────────────┐
            │           Convert format           │───S29
            └──────────────────────────────────┘
```

FIG.4

$h1 \quad h2 \quad h3$

$h4 \quad h5 \quad h6$

$h7 \quad h8 \quad h9$

FIG.5

$fig(0,0)$      $fig(0,1)$      $fig(0,2)$

$fig(1,0)$      $fig(1,1)$      $fig(1,2)$

$fig(2,0)$      $fig(2,1)$      $fig(2,2)$